# EUROPEAN PATENT APPLICATION

(11) **EP 4 424 507 A1**
(43) Date of publication of application: **04.09.2024**
(21) Application number: 22887009.3
(22) Date of filing: 25.10.2022
(51) Int. Cl.: B32B 9/00, B32B 27/32, B65D 65/40

(54) **GAS-BARRIER FILM AND PACKAGING MATERIAL**

(30) Priority: 28.10.2021 JP 2021176227
(71) Applicant: Toppan Holdings Inc., Tokyo 110-0016 (JP)
(72) Inventor: FUKUGAMI Miki, Tokyo 110-0016 (JP); NISHIKAWA Takeshi, Tokyo 110-0016 (JP); TANAKA Ayumi, Tokyo 110-0016 (JP)
(74) Representative: Hoffmann Eitle
(86) International application number: PCT/JP2022/039725
(87) International publication number: WO 2023/074683

(57) **Abstract**

A gas barrier film includes: a substrate layer containing a polypropylene resin; a resin layer containing a copolymer of propylene and another monomer; an anchor coat layer; and a vapor deposition layer of an inorganic oxide, laminated in this order, wherein the anchor coat layer contains acrylic resin, and the anchor coat layer has a thickness of 0.1 µm to 0.7 µm. A packaging material includes the above gas barrier film, and a sealant layer containing a polypropylene resin.

## Description

### [Technical Field]

The present disclosure relates to gas barrier films and packaging materials.

### [Background Art]

Gas barrier films are widely used mainly as packaging materials for foods and pharmaceuticals, and subjected to heat sterilization such as boiling treatment and retort treatment. In recent years, with an increase in awareness of environmental issues, there has been an increasing interest in packaging materials using a single material, called mono-material packaging materials, which are suitable for recycling. Since polypropylene and the like are typically used as a laminate film for packaging materials, it is required to use polypropylene and the like as a substrate for gas barrier films in order to produce mono-material packaging materials using such a film.

Polypropylene films are excellent in transparency, mechanical strength and heat resistance, but inferior to films made of other materials in metal deposition capability, adhesion to other resins, and secondary processability such as printability. In order to address such problems, various methods have been proposed. For example, PTL 1 proposes a method of blending ethylene-α-olefin copolymer with a polypropylene film, and PTLs 2 and 3 propose a method of laminating an ethylene-α-olefin copolymer, or the like.

### [Citation List]

### [Patent Literature]

PTL 1: JP S63-291929 A
PTL 2: JP S63-290743 A
PTL 3: JP H3-49952 A

### [Summary of Invention]

### [Technical Problem]

However, conventional gas barrier films cannot have an excellent lamination strength while maintaining an oxygen transmission rate at a sufficiently low level during heat sterilization treatment after producing packages such as pouches from the packaging materials.

Therefore, an aspect of the present disclosure has been made to provide a gas barrier film used for producing a package having a sufficiently low oxygen transmission rate and excellent lamination strength even after heat sterilization treatment. Another aspect of the present disclosure has been made to provide a packaging material using the above gas barrier film.

### [Solution to Problem]

An aspect of the present disclosure is a gas barrier film including: a substrate layer containing a polypropylene resin; a resin layer containing a copolymer of propylene and another monomer; an anchor coat layer; and a vapor deposition layer of an inorganic oxide, laminated in this order, wherein the anchor coat layer contains (meth)acrylic resin, and the anchor coat layer has a thickness of 0.1 µm to 0.7 µm.

Since the thickness of the anchor coat layer is within a predetermined numerical range and an interface between the resin layer and the vapor deposition layer is stabilized due to the resin layer being provided between the substrate layer and the anchor coat layer, the above gas barrier film can maintain gas barrier properties and adhesiveness even after heat sterilization treatment is applied to a package using the gas barrier film. Therefore, the package using the above barrier film has a sufficiently low oxygen transmission rate and excellent lamination strength even after heat sterilization treatment.

In the above gas barrier film, a surface of the resin layer on the vapor deposition layer-side may have a maximum peak height Sp of 1.5 µm or less when a region of 250 µm × 250 µm of the surface was observed with a laser microscope at 50x magnification, and may have an arithmetic mean roughness Sa of 5 nm or greater when a region of 10 µm × 10 µm of the surface was observed with an atomic force microscope (AFM).

The above gas barrier film may further include a gas barrier coating layer on a side of the vapor deposition layer opposite to that facing the anchor coat layer.

Another aspect of the present disclosure is a packaging material including: the above gas barrier film; and a sealant layer containing a polypropylene resin.

### [Advantageous Effects of Invention]

According to an aspect of the present disclosure, a gas barrier film used for producing a package having a sufficiently low oxygen transmission rate and excellent lamination strength even after heat sterilization treatment can be provided. According to another aspect of the present disclosure, a packaging material using the above gas barrier film can be provided.

### [Brief Description of Drawings]

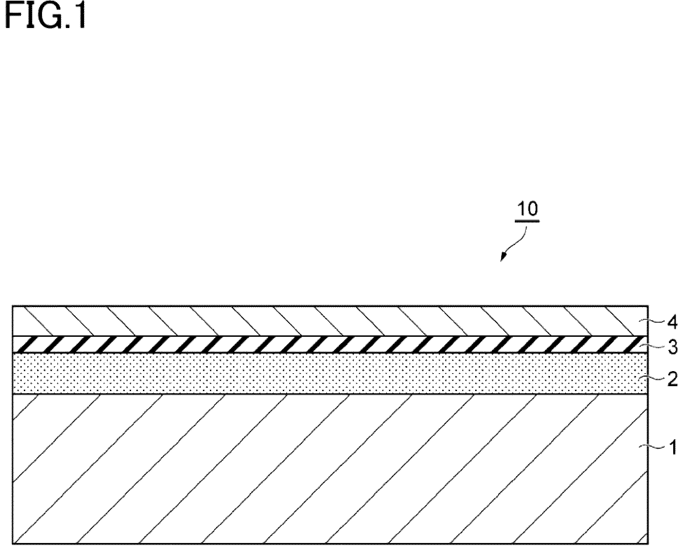

Fig. 1 is a schematic cross-sectional view illustrating a gas barrier film according to an embodiment of the present disclosure.

### [Description of Embodiments]

With reference to the drawings as appropriate, embodiments of the present disclosure will be described in detail. It should be noted that the present disclosure is not limited to the following embodiments.

### <Gas Barrier Film>

Fig. 1 is a schematic cross-sectional view illustrating a gas barrier film according to an embodiment. As shown in Fig. 1, a gas barrier film 10 according to the present embodiment includes a substrate layer 1, a resin layer 2, an anchor coat layer 3 and a vapor deposition layer 4 laminated in this order.

### [Substrate Layer]

The substrate layer is a film (base film) serving as a support and contains a polypropylene resin. The substrate layer may be a film obtained by, for example, forming a sheet of polypropylene resin, and stretching the sheet to form a uniaxial or biaxial film.

The polypropylene resin may be a crystalline polypropylene resin. From the viewpoint of improving heat resistance, the polypropylene resin may be a homopolypropylene resin, which is a homopolymer of propylene. The polypropylene resin may contain, for example, a random copolymer of propylene and α-olefin.

The content of the polypropylene resin relative to the total mass of the substrate layer may be 90 mass% or greater, preferably 95 mass% or greater and more preferably 99 mass% or greater. The content of the polypropylene resin relative to the total mass of the substrate layer may be substantially 100 mass% (the substrate layer may be made of polypropylene resin).

The substrate layer may contain, for example, organic additives such as antioxidants, stabilizers, lubricants and antistatic agents, or inorganic additives such as silica, zeolite, hydrotalcite, silicon particles and Syloid.

The substrate layer may have a thickness of 3 µm or greater, preferably 6 µm or greater, more preferably 10 µm or greater, and still more preferably 15 µm or greater, and 200 µm or less, preferably 100 µm or less, more preferably 50 µm or less, and still more preferably 30 µm or less. From these viewpoints, the thickness of the substrate layer may be 3 µm to 200 µm, preferably 6 µm to 100 µm, more preferably 10 µm to 50 µm, and still more preferably 15 µm to 30 µm.

The polypropylene used for the substrate layer may be a resin polymerized from fossil fuels, a recycled resin, or a resin obtained by polymerizing raw materials derived from biomass such as plants. These resins may be used singly, or by mixing a resin polymerized from fossil fuels with a recycled resin or a resin obtained by polymerizing raw materials derived from biomass such as plants.

### [Resin Layer]

The resin layer contains a copolymer of propylene and another monomer. The resin layer may be formed directly on a surface of the substrate layer. Due to the resin layer being included in the gas barrier film, stress applied to the vapor deposition layer due to shrinkage of the substrate layer after heat sterilization can be reduced, preventing destruction of the vapor deposition layer.

The content of the copolymer relative to the total mass of the resin layer may be 90 mass% or greater, preferably 95 mass% or greater, and more preferably 99 mass% or greater. The content of the copolymer relative to the total mass of the resin layer may be substantially 100 mass% (the resin layer may be made of the copolymer).

The content of propylene units in the copolymer relative to the total monomer units may be 80 mol% or greater, preferably 90 mol% or greater, more preferably 95 mol% or greater, and still more preferably 96 mol% or greater, and may be 99.5 mol% or less, preferably 99 mol% or less, more preferably 98 mol% or less, and still more preferably 97 mol% or less. The content of propylene units in the copolymer relative to the total monomer units may be 80 to 99.5 mol%, preferably 90 to 99 mol%, more preferably 95 to 98 mol%, and still more preferably 96 to 97 mol%.

Examples of another monomer include α-olefins such as ethylene, 1-butene, 1-hexene, and the like. The copolymer may contain ethylene units as another monomer. The copolymer may be a copolymer of propylene and a plurality of other monomer units.

From the viewpoint of excellent adhesion to the vapor deposition layer, the content of other monomer units in the copolymer relative to the total monomer units may be 0.5 mol% or greater, preferably 1 mol% or greater, more preferably 2 mol% or greater, and still more preferably 3 mol% or greater. From the viewpoint of improving heat resistance, the content of other monomer units in the copolymer relative to the total monomer units may be 20 mol% or less, preferably 10 mol% or less, more preferably 5 mol% or less, and still more preferably 4 mol% or less. The content of other monomer units in the copolymer relative to the total monomer units may be 0.5 to 20 mol%, preferably 1 to 10 mol%, more preferably 2 to 5 mol%, and still more preferably 3 to 4 mol%.

The copolymer used for the resin layer may be a resin polymerized from fossil fuels, a recycled resin, or a resin obtained by polymerizing raw materials derived from biomass such as plants. These resins may be used singly, or by mixing a resin polymerized from fossil fuels with a recycled resin or a resin obtained by polymerizing raw materials derived from biomass such as plants.

From the viewpoint of providing the package with a sufficiently low oxygen transmission rate even after heat sterilization treatment, a surface of the resin layer on the vapor deposition layer-side, when a region of 250 µm × 250 µm of the surface is observed with a laser microscope at 50x magnification, may have a maximum peak height Sp of 1.5 µm or less, preferably 1.2 µm or less, and more preferably 1.1 µm or less. The maximum peak height Sp may be 0.1 µm or greater, and preferably 0.5 µm or greater. The maximum peak height Sp may be 0.1 to 1.5 µm, and preferably 0.5 to 1.2 µm.

From the viewpoint of providing the package with a sufficiently low oxygen transmission rate even after heat sterilization treatment, a surface of the resin layer on the vapor deposition layer-side, when a region of 10 µm × 10 µm of the surface is observed with an atomic force microscope (AFM), may have an arithmetic mean roughness Sa of 5 nm or greater, preferably 5.5 µm or greater, more preferably 6 nm or greater, still more preferably 6.5 nm or greater, and even still more preferably 7 nm or greater. From the viewpoint of providing the package with a sufficiently low oxygen transmission rate even after heat sterilization treatment, the arithmetic mean roughness Sa may be 20 nm or less, preferably 15 nm or less, more preferably 10 nm or less, still more preferably 8 nm or less, and even still more preferably 7.5 nm or less. The arithmetic mean roughness Sa may be 5 to 20 nm, preferably 5.5 to 15 nm, more preferably 6 to 10 nm, still more preferably 6.5 to 8 nm, and even still more preferably 7 to 7.5 nm.

From the viewpoint of easily reducing a stress applied to the vapor deposition layer due to shrinkage of the substrate layer after heat sterilization, the resin layer may have a thickness of 0.3 µm or greater, preferably 0.5 µm or greater, and more preferably 0.7 µm or greater. From the viewpoint of improving heat resistance, the resin layer may have a thickness of 2.0 µm or less, preferably 1.8 µm or less, and more preferably 1.5 µm or less. From these viewpoints, the thickness of the resin layer may be 0.3 µm to 2.0 µm, preferably 0.5 µm to 1.8 µm, and more preferably 0.7 µm to 1.5 µm.

The resin layer can by formed on the substrate layer, for example, by co-extruding a polypropylene resin constituting the substrate layer and a copolymer of propylene and another monomer constituting the resin layer. The resin layer may be formed on one side or both sides of the substrate layer.

### [Anchor Coat Layer]

The anchor coat layer contains (meth)acrylic resin and has a thickness of 0.1 to 0.7 µm. The anchor coat layer included in the gas barrier film can improve adhesion to the vapor deposition layer. The "(meth)acrylic resin" refers to at least one of "acrylic resin" and "methacrylic resin" corresponding thereto.

Examples of the (meth)acrylic resin include (meth)acrylic polymers obtained by polymerizing polymerizable monomers including (meth)acrylic monomers. The (meth)acrylic polymer may be a homopolymer or a copolymer with a polymerizable monomer other than the (meth)acrylic monomer. The (meth)acrylic resin may be a resin capable of thermal crosslinking such as urethane-curing, epoxy-curing, or the like. The (meth)acrylic resin may be a polyol having two or more hydroxyl groups per molecule from the viewpoint of reactivity with the isocyanate compound used as a curing agent, which will be described later, and in particular, may be a (meth)acrylic polyol.

The (meth)acrylic polyol may be a (meth)acrylic copolymer obtained by copolymerizing a hydrocarbon (meth)acrylate and a hydroxyl group-containing monomer, or may be a (meth)acrylic copolymer obtained by copolymerizing a hydrocarbon (meth)acrylate, a hydroxyl group-containing monomer and a monomer component other than these monomers (another monomer component). By copolymerizing the above monomers, a (meth)acrylic polyol containing a plurality of hydroxyl groups can be obtained.

The anchor coat layer may contain a curing agent. The curing agent may be an isocyanate compound having two or more NCO groups per molecule from the viewpoint of excellent reactivity with the (meth)acrylic resin.

The isocyanate compound may be a monomer isocyanate. Examples of the monomer isocyanate include aromatic or araliphatic isocyanates such as tolylene diisocyanate (TDI), diphenylmethane diisocyanate (MDI), xylylene diisocyanate (XDI) and tetramethyl xylylene diisocyanate (TMXDI); and aliphatic isocyanates such as hexamethylene diisocyanate (HDI), bisisocyanate methylcyclohexane (H6XDI), isophorone diisocyanate (IPDI) and dicyclohexylmethane isocyanate (H12MDI).

The isocyanate compound may be a polymer or a derivative of the above monomer isocyanate. The isocyanate compound may be, for example, an isocyanate having a structure such as an isocyanurate form which is a trimer, an adduct form obtained by reacting with 1,1,1-trimethylolpropane or the like, or a biuret form obtained by reacting with biuret. The isocyanate compound may be an isocyanate having an aromatic ring from the viewpoint of excellent reactivity with the (meth)acrylic resin.

When the (meth)acrylic resin is a (meth)acrylic polyol, the content of the isocyanate compound may be such that the number of OH groups in the acrylic polyol is equal to the number of NCO groups in the isocyanate compound.

The anchor coat layer may contain a silane coupling agent from the viewpoint of further improving adhesion to the vapor deposition layer. Examples of the silane coupling agent include epoxy silane coupling agents having an epoxy group, such as 3-glycidoxypropyltrimethoxysilane; amino silane coupling agents having an amino group, such as 3-aminopropyltrimethoxysilane; mercapto silane coupling agents having a mercapto group, such as 3-mercaptopropyltrimethoxysilane; and isocyanate silane coupling agents having an NCO group, such as 3-isocyanatopropyltriethoxysilane. These silane coupling agents can be used singly or in combination of two or more.

From the viewpoint of providing the package with a sufficiently low oxygen transmission rate and excellent lamination strength after heat sterilization, the anchor coat layer may have a thickness of less than 0.7 µm, preferably 0.65 µm or less, more preferably 0.6 µm or less, still more preferably 0.4 µm or less, even still more preferably 0.2 µm or less, even still more preferably 0.18 µm or less, even still more preferably 0.16 µm or less, and even still more preferably 0.14 µm or less. The anchor coat layer may have a thickness of 0.11 µm or greater, preferably 0.12 µm or greater, and more preferably 0.13 µm or greater. From these viewpoints, the thickness of the anchor coat layer may be 0.1 µm or more and less than 0.7 µm, preferably 0.1 µm to 0.65 µm, more preferably 0.11 µm to 0.6 µm, still more preferably 0.12 µm to 0.4 µm, and even still more preferably 0.13 µm to 0.2 µm.

The anchor coat layer may be formed by, for example, applying a (meth)acrylic primer solution containing (meth)acrylic resin or the like to the resin layer by gravure coating, roll coating, bar coating, or the like, and then drying it.

### [Vapor Deposition Layer]

The vapor deposition layer contains an inorganic oxide. The vapor deposition layer may be formed directly on the anchor coat layer from the viewpoint of improving the gas barrier properties to water vapor, oxygen, and the like. The vapor deposition layer may be transparent.

Examples of the inorganic oxide includes aluminum oxide, silicon oxide, tin oxide, magnesium oxide, and a mixture thereof. From the viewpoint of excellent sterilization resistance, the inorganic oxide may be at least one selected from the group consisting of aluminum oxide and silicon oxide.

The vapor deposition layer may have a thickness of 5 nm or greater, preferably 10 nm or greater, and more preferably 15 nm or greater from the viewpoint of ensuring uniform film thickness and excellent gas barrier properties, and may have a thickness of 300 nm or less, preferably 150 nm or less, and more preferably 100 nm or less from the viewpoint of preventing cracking in the vapor deposition layer even if external force is applied after film formation. From these viewpoints, the thickness of the vapor deposition layer may be 5 to 300 nm, preferably 10 to 150 nm, and more preferably 15 to 100 nm.

The vapor deposition layer can be formed by, for example, vacuum deposition, plasma-enhanced deposition, ion beam-enhanced deposition, sputtering, reactive deposition, or the like. The vapor deposition layer may be formed by vacuum deposition from the viewpoint of high productivity, or may be formed by plasma-enhanced deposition or ion beam-enhanced deposition from the viewpoint of excellent adhesion between the vapor deposition layer and the resin layer and the viewpoint of improving the density of the deposition layer, or may be formed by reactive deposition in which gases such as oxygen are supplied from the viewpoint of improving the transparency of the vapor deposition layer.

A heating means for vacuum deposition may be electron beam heating, resistance heating, induction heating, or the like. Considering a wide range of selectivity of the evaporative materials, the heating means for vacuum deposition may be electron beam heating.

### [Gas Barrier Coating Layer]

The gas barrier film may further include a gas barrier coating layer on a side of the vapor deposition layer opposite to that facing the anchor coat layer. The gas barrier coating layer included in the gas barrier film can protect the vapor deposition layer and further improve the gas barrier properties.

The gas barrier coating layer may contain a silicon compound or a hydrolysate thereof, and a water-soluble polymer having a hydroxyl group.

The silicon compound may be, for example, at least one selected from the group consisting of Si(OR¹)₄ and R²Si(OR³)₃. OR¹ and OR³ are independently hydrolysable groups, and R² is an organic functional group. R² may be a vinyl group, an epoxy group, a methacryloxy group, a ureido group, an isocyanate group, or the like. Si(OR¹)₄ may be tetraethoxysilane (Si(OC₂H₅)₄) from the viewpoint of being relatively stable in an aqueous solvent after hydrolysis.

Examples of the water-soluble polymer having a hydroxyl group include polyvinyl alcohol, polyvinyl pyrrolidone, starch, methyl cellulose, carboxymethyl cellulose, sodium alginate, and the like. The water-soluble polymer having a hydroxyl group may be polyvinyl alcohol from the viewpoint of excellent gas barrier properties.

The gas barrier coating layer may further contain additives such as isocyanate compounds, silane coupling agents, dispersants, stabilizers, viscosity modifiers and colorants.

The thickness of the gas barrier coating layer may be 0.1 µm or greater and preferably 0.3 µm or greater, and may be 5 µm or less and preferably 1 µm or less. The thickness of the gas barrier coating layer may be 0.1 µm to 5 µm and preferably 0.3 µm to 1 µm.

The gas barrier coating layer can be formed by, for example, dissolving a water-soluble polymer in water or a water/alcohol mixed solvent, adding a silicon compound or a hydrolysate thereof to the mixture, applying the mixed solution to the vapor deposition layer by gravure coating, roll coating, bar coating, or the like, and then drying it.

When the water-soluble polymer is polyvinyl alcohol, the content of the polyvinyl alcohol in the mixed solution relative to the total solid content in the mixed solution may be 20 mass% or greater and preferably 25 mass% or greater from the viewpoint of easily forming the gas barrier coating layer, and may be 50 mass% or less and preferably 40 mass% or less from the viewpoint of excellent gas barrier properties. The content of the polyvinyl alcohol in the mixed solution relative to the total solid content in the mixed solution may be 20 mass% to 50 mass%, and preferably 25 mass% to 40 mass%.

### <Packaging Material>

Another embodiment of the present disclosure is a packaging material including the above-mentioned gas barrier film, and a sealant layer containing a polypropylene resin. The sealant layer may be, for example, a stretched or unstretched polypropylene film.

The thickness of the sealant layer may be 10 µm or greater and preferably 20 µm or greater, and may be 200 µm or less and preferably 100 µm or less. The thickness of the sealant layer may be 10 µm to 200 µm and preferably 20 µm to 100 µm.

The packaging material may include an adhesive layer between the gas barrier film and the sealant layer. The adhesive layer may be made of, for example, a polyurethane resin obtained by reacting a bifunctional or higher functional isocyanate compound with a polyester polyol, a polyether polyol, an acrylic polyol, a carbonate polyol, or the like.

From the viewpoint of improving adhesiveness, the adhesive layer may contain, in addition to the polyurethane resin, a carbodiimide compound, an oxazoline compound, an epoxy compound, a phosphorus compound, a silane coupling agent, or the like.

According to the packaging material using the above gas barrier film, it is possible to produce a package with a sufficiently low oxygen transmission rate and excellent lamination strength even after heat sterilization treatment. Therefore, a package formed of such a packaging material can contain foods, pharmaceuticals, and the like. The packaging material may be formed into a bag-shaped package (packaging bag) by folding a single sheet of packaging material in half with the sealant layer inside and then heat-sealing the three sides other than the folded part, or may be formed into a bag-shaped package by overlapping two sheets of packaging material with the sealant layer inside and then heat-sealing the four sides.

The package may be provided with a spout. The package with a spout may have a structure in which a spout is sandwiched and fixed between two gas barrier films constituting the packaging bag, or an opening is formed on one side of the package and a pouring spout is adhered and fixed thereto. The pouring spout may be provided on the top of the package, or may be provided on the side, bottom, or upper corner of the package. When the contents are a liquid or gel, a straw reaching the bottom of the package may be provided in addition to the pouring spout (spout assembly) so that the user can directly suck on the spout to suck out the contents.

Another form of the package with a spout includes a bag-in-box in which a bag (inner bag) containing a liquid such as a soft drink or an alcoholic drink is accommodated in a carton (outer box). That is, the packaging material according to the present embodiment can be used as a bag for the bag-in-box, particularly as a bag provided with a pouring spout (tube).

When the packaging material is used as a package with a spout, the spout portion or the entire spout of the cap may be made of the same resin as that of the substrate layer of the gas barrier film from the viewpoint of improving recyclability.

### Examples

The present disclosure will be described in more detail with reference to the following examples, but the present disclosure is not limited to these examples.

### <Example 1>

A homopolypropylene resin and an ethylene-propylene random copolymer resin (ethylene unit content: 3.2 mol%, propylene unit content: 96.8 mol%) were co-extruded to form a laminate of a substrate layer containing homopolypropylene and a resin layer containing an ethylene-propylene random copolymer. The substrate layer had a thickness of 19 µm, and the resin layer had a thickness of 0.8 µm.

### (Measurement of Maximum Peak Height Sp)

A surface of the resin layer on the vapor deposition layer-side was observed under the following conditions, and the maximum peak height Sp measured was 1.1 µm.
Device name: LEXT OLS4000 (manufactured by Olympus)
Observation conditions: observation magnification 50x
Observation area: Region of 250 µm × 250 µm
Filter: surface correction
Mode: surface roughness

### (Measurement of Arithmetic Mean Height Sa)

A surface of the resin layer on the vapor deposition layer-side was observed under the following conditions, and the arithmetic mean roughness Sa measured was 7.5 nm.
Device name: AFM5400L (manufactured by Hitachi High-Tech Corporation)
Needle used: MPP-11100-10
Measurement area: Region of 10 µm × 10 µm
Sample asperities: standard
Softness: soft
Frequency: 0.6
Tilt correction: cubic

Then, acrylic polyol and tolylene diisocyanate were mixed so that the amount of NCO groups became equal to that of OH groups of the acrylic polyol, and then diluted with ethyl acetate so that the total solid content became 5 mass%. 3-glycidoxypropyltrimethoxysilane was added at 5 wt% of the total solid content and mixed to obtain an acrylic primer solution. The acrylic primer solution was applied to a resin layer-side surface of the laminate formed by gravure coating, and dried to form an anchor coat layer. The thickness of the anchor coat layer measured by the following method was 0.13 µm. Then, a silicon oxide was deposited on the anchor coat layer by reactive vapor deposition using high-frequency excited ion plating in an oxygen atmosphere at reduced pressure to form a 30 nm-thick vapor deposition layer of an inorganic oxide. Further, a solution obtained by mixing the following liquid A, liquid B and liquid C at a mixing ratio (mass%) of 70/20/10 respectively was applied on the vapor deposition layer by gravure coating, dried at 80°C for 20 seconds to form a 0.3 µm-thick gas barrier coating layer. Thus, a gas barrier layer was produced.
Liquid A: Hydrolyzed solution (solid content of 5 mass% (equivalent to SiO₂)) obtained by adding 72.1 g of hydrochloric acid (0.1 N) to a mixed solution of 17.9 g of tetraethoxysilane and 10 g of methanol, and stirring the mixture for 30 minutes for hydrolysis
Liquid B: Water/methanol solution containing 5 mass% of polyvinyl alcohol (water/methanol weight ratio = 95/5)
Liquid C: Hydrolyzed solution (solid content of 5 mass% (equivalent to R²Si(OH)₃)) obtained by gradually adding hydrochloric acid (1 N) to a mixed solution of β-(3,4 epoxy cyclohexyl) trimethoxysilane and isopropyl alcohol (IPA solution), stirring the mixture for 30 minutes for hydrolyzing with a water/IPA solution (water/IPA weight ratio = 1/1)

### <Example 2>

A gas barrier film was prepared in the same manner as in Example 1, except that the thickness of the anchor coat layer was 0.6 µm.

### <Comparative Example 1>

A gas barrier film was prepared in the same manner as in Example 1, except that the thickness of the anchor coat layer was 0.05 µm.

### <Comparative Example 2>

A gas barrier film was prepared in the same manner as in Example 1, except that a 20 µm-thick substrate layer containing homopolypropylene was used instead of the laminate of the substrate layer containing homopolypropylene and the resin layer containing an ethylene-propylene random copolymer.

### <Comparative Example 3>

A gas barrier film was prepared in the same manner as in Example 1, except that the thickness of the anchor coat layer was 1.0 µm.

### <Example 3>

A gas barrier film was prepared in the same manner as in Example 1, except that the thickness of the resin layer was 0.3 µm. A surface of the resin layer on the vapor deposition layer-side had a maximum peak height Sp of 1.0 µm and an arithmetic mean roughness Sa of 7.8 nm.

### [Evaluation]

### (Method of Measuring Anchor Coat Layer Thickness)

The prepared gas barrier film was embedded in a photocurable resin to prepare a block piece. Then, the block piece was sectioned using a diamond knife of an ultramicrotome (EM UC7 manufactured by Leica Microsystems). A cross-section of the block piece was observed with a scanning electron microscope (SU8020 manufactured by Hitachi High-Tech Corporation) at an observation magnification of 20,000x, and the thickness of the anchor coat layer was measured from the observed image. Table 1 shows the measurement results.

### (Retort Treatment)

A gas barrier coating layer-side surface of the prepared gas barrier film was laminated with a 60 µm-thick unstretched polypropylene film by dry lamination using a two-part curing type urethane-based adhesive to prepare a laminate film (packaging material). Three sides of the prepared laminate film were heat-sealed at 190°C for 1 second, filled with water as the content, and the remaining one side was heat-sealed to produce a package (pouch). Then, the pouch was subjected to heat sterilization treatment (retort treatment) at 130°C for 30 minutes.

### (Measurement of Oxygen Transmission Rate)

After the retort treatment of the pouch, the oxygen transmission rate of the pouch was measured using an oxygen transmission rate analyzer (OXTRAN 2/20 manufactured by Modern Control Inc.) under conditions of temperature of 30°C and a relative humidity of 70% according to JIS K-7126, method B (equal-pressure method) and ASTM D3985-81. When the oxygen transmission rate was 2.0 cm³ (STP)/m²·day·atm or less, it was determined that the pouch had a low oxygen transmission rate even after the retort treatment. Table 1 shows the measurement results.

### (Measurement of Lamination Strength)

After the retort treatment of the pouch, the lamination strength between the barrier film and the unstretched polypropylene film of the pouch was measured according to JIS Z-1707. The lamination strength was measured at a test width of 15 mm, a peeling rate of 300 mm/min, and a peeling angle of 180 degrees. When the lamination strength was 3.0 N/15 mm or greater, it was determined that the pouch had excellent lamination strength even after the retort treatment. Table 1 shows the measurement results.

**[Table 1]**

| | Thickness of anchor coat layer (µm) | Oxygen transmission rate (cm³ (STP)/m²·day·atm) | Lamination strength (N/15 mm) |
|---|---|---|---|
| Ex.1 | 0.13 | 0.8 | 3.5 |
| Ex.2 | 0.6 | 1.2 | 3.4 |
| Ex.3 | 0.13 | 1.0 | 3.5 |
| Comp.Ex.1 | 0.05 | 3.5 | 3.4 |
| Comp.Ex.2 | 0.13 | 6.2 | 0.6 |
| Comp.Ex.3 | 1.2 | 2.7 | 0.9 |

### [Reference Signs List]

- 1 ...: Substrate layer,
- 2 ...: Resin layer,
- 3 ...: Anchor coat layer,
- 4 ...: Vapor deposition layer,
- 10 ...: Gas barrier film.

## Claims

1. A gas barrier film comprising:
a substrate layer containing a polypropylene resin;
a resin layer containing a copolymer of propylene and another monomer;
an anchor coat layer; and
a vapor deposition layer of an inorganic oxide, laminated in this order, wherein
the anchor coat layer contains (meth)acrylic resin, and
the anchor coat layer has a thickness of 0.1 µm to 0.7 µm.

2. The gas barrier film according to claim 1, wherein
a surface of the resin layer on the vapor deposition layer-side has a maximum peak height Sp of 1.5 µm or less when a region of 250 µm × 250 µm of the surface was observed with a laser microscope at 50x magnification, and has an arithmetic mean roughness Sa of 5 nm or greater when a region of 10 µm × 10 µm of the surface was observed with an atomic force microscope (AFM).

3. The gas barrier film according to claim 1 or 2, further comprising:
a gas barrier coating layer on a side of the vapor deposition layer opposite to that facing the anchor coat layer.

4. A packaging material comprising:
the gas barrier film according to any one of claims 1 to 3; and
a sealant layer containing a polypropylene resin.
